# EUROPEAN PATENT APPLICATION

(11) **EP 3 547 511 A1**
(43) Date of publication of application: **02.10.2019**
(21) Application number: 17874152.6
(22) Date of filing: 20.11.2017
(51) Int. Cl.: H02K 35/02

(54) **ELECTRIC POWER GENERATING ELEMENT, AND SMART KEY**

(30) Priority: 28.11.2016 JP 2016229913
(71) Applicant: Nidec Corporation, Kyoto-shi, Kyoto 601-8205 (JP)
(72) Inventor: UENO,Soei, Kyoto-shi Kyoto 601-8205 (JP)
(74) Representative: Zimmermann, Tankred Klaus
(86) International application number: PCT/JP2017/041727
(87) International publication number: WO 2018/097110

(57) **Abstract**

An aspect of a power generation element of the present disclosure includes a coil that extends in a first direction, a magnetic member that is inserted inside the coil and in which a large Barkhausen effect occurs, a magnet disposed outside the coil and in a vicinity of the magnetic member, a first elastic member fixed to the magnet, and a casing that houses the magnetic member, the coil, the magnet, and the first elastic member. The magnet has alternately different magnetic poles arranged side by side in a second direction orthogonal to the first direction. The first elastic member connects the magnet and the casing to each other and is stretchable in the second direction. The magnet moves in the second direction relative to the casing in association with expansion and contraction of the first elastic member.

## Description

### Technical Field

The present disclosure relates to a power generation element and a smart key.

### Background Art

It is known that electricity can be generated by generating voltage pulses in a coil by using a large Barkhausen jump (a large Barkhausen effect). For example, Japanese Patent No. 4415158 describes a configuration in which voltage pulses are generated in a coil by creating a large Barkhausen jump in a magnetic element by rotating magnets.

### Citation List

### Patent Literature

PTL 1: Japanese Patent No. 4415158

### Summary of Invention

### Technical Problem

In the power generation element described above that uses a large Barkhausen jump, electricity is generated by moving the magnets relative to the magnetic element in which the large Barkhausen jump occurs. However, in a configuration such as the one in Japanese Patent No. 4415158 described above, the magnets need to be rotated in order to generate electricity. Accordingly, when a vibration that is generated due to the environment under which the power generation element is situated such as, for example, a vibration generated by a movement of a person, is used, problems such as a difficulty in rotating the magnet and not being able to obtain sufficient power generating efficiency occur.

In view of the problems described above, an object of the present disclosure is to provide a power generation element that uses the large Barkhausen effect and that is capable of efficiently generating electricity by using vibration, and to provide a smart key including such a power generation element.

### Solution to Problem

An aspect of a power generation element of the present disclosure includes a coil that extends in a first direction, a magnetic member that is inserted inside the coil and in which a large Barkhausen effect occurs, a magnet disposed outside the coil and in a vicinity of the magnetic member, a first elastic member fixed to the magnet, and a casing that houses the magnetic member, the coil, the magnet, and the first elastic member. The magnet has alternately different magnetic poles arranged side by side in a second direction orthogonal to the first direction. The first elastic member connects the magnet and the casing to each other and is stretchable in the second direction. The magnet moves in the second direction relative to the casing in association with expansion and contraction of the first elastic member.

An aspect of a smart key of the present disclosure includes the power generation element described above.

### Advantageous Effects of Invention

According to an aspect of the present disclosure, a power generation element that uses a large Barkhausen effect and that is capable of efficiently generating electricity by using vibration, and a smart key including such a power generation element are provided.

### Brief Description of Drawings

Fig. 1 is a cross-sectional view of a power generation element of a first embodiment viewed from an upper side.
Fig. 2 is a drawing illustrating the power generation element of the first embodiment and is a cross-sectional view taken along line II-II in Fig. 1.
Fig. 3 is a graph illustrating a change in a strength of a magnetic field caused by a magnet acting on a magnetic member and a change in a voltage generated in the coil.
Fig. 4 is a graph illustrating a relationship between a magnetic flux density in the magnetic member and the strength of the magnetic field caused by the magnet acting on the magnetic member.
Fig. 5 is a cross-sectional view of a power generation element of a second embodiment viewed from the upper side.
Fig. 6 is a drawing illustrating the power generation element of the second embodiment and is a cross-sectional view taken along line VI-VI in Fig. 5.
Fig. 7 is a cross-sectional view of a power generation element of a third embodiment viewed from the upper side.
Fig. 8 is a drawing illustrating the power generation element of the third embodiment and is a cross-sectional view taken along line VIII-VIII in Fig. 7.
Fig. 9 is a schematic block diagram illustrating an embodiment of a smart key.

### Description of Embodiments

In the XYZ coordinate system illustrated in each drawing, the Z-axis direction is the vertical direction. The X-axis direction and the Y-axis direction are each a horizontal direction orthogonal to the Z-axis direction, and are orthogonal to each other. In the following description, the Z-axis direction will be referred to as an "up-down direction Z," the X-axis direction will be referred to as a "left-right direction X," and the Y-axis direction will be referred to as a "front-back direction Y." The positive side in the Z-axis direction is referred to as an "upper side" and the negative side in the Z-axis direction is referred to as a "lower side." The positive side in the X-axis direction is referred to as a "right side" and the negative side in the X-axis direction is referred to as a "left side." The positive side in the Y-axis direction is referred to as a "front side" and the negative side in the Y-axis direction is referred to as a "back side." In the present embodiment, the up-down direction Z corresponds to a third direction, the left-right direction X corresponds to a second direction, and the front-back direction Y corresponds to a first direction. Note that the left-right direction X, the front-back direction Y, the right side, the left side, the front side, and the back side are merely terms for describing the relative positional relationship between the members. The actual dispositional relationship and the like may be a dispositional relationship and the like different from the dispositional relationship and the like depicted by the above terms.

### <First Embodiment>

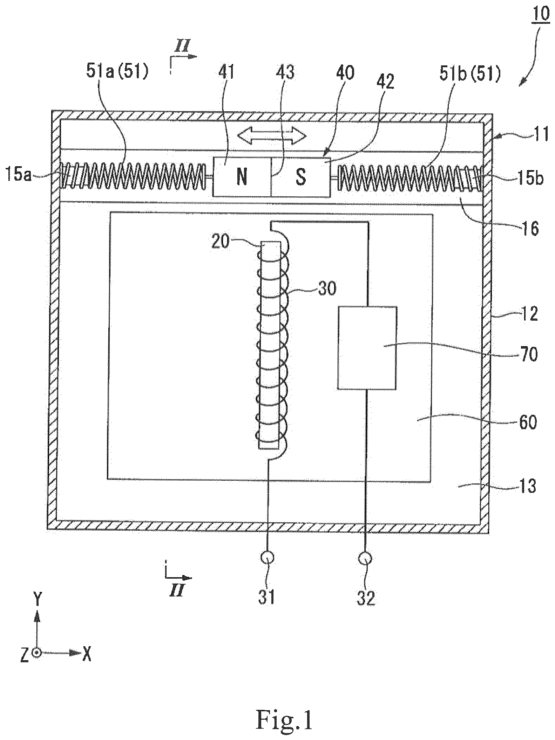

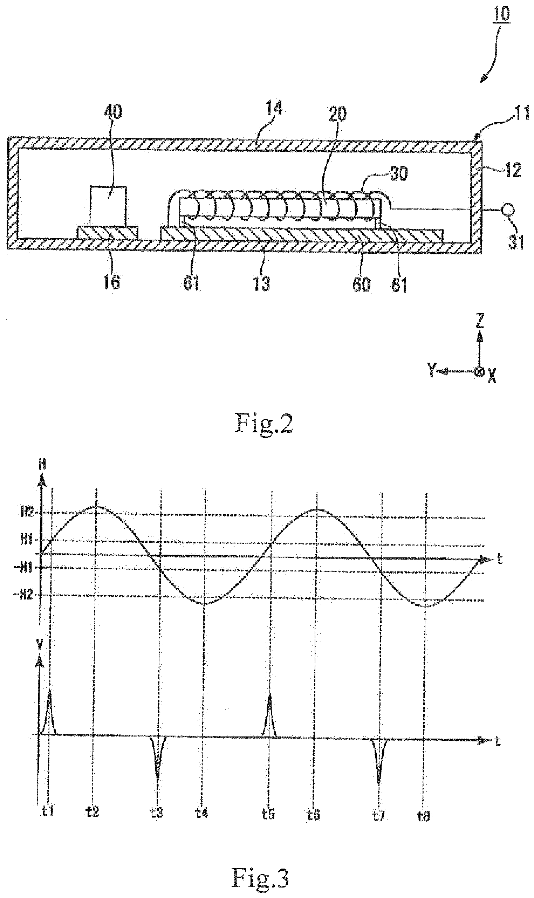

As illustrated in Fig. 1, the power generation element 10 of the present embodiment includes a casing 11, a circuit board 60, a capacitor 70, a coil 30, a magnetic member 20, a magnet 40, and a first elastic member 51. As illustrated in Figs. 1 and 2, an external form of the casing 11 viewed in the up-down direction Z is a square box shape. The casing 11 houses the circuit board 60, the capacitor 70, the magnetic member 20, the coil 30, the magnet 40, and the first elastic member 51. Now that in Fig. 2, an illustration of the first elastic member 51 is omitted.

The casing 11 includes a bottom wall portion 13, a side wall portion 12, a top wall portion 14, a support plate portion 16, and first protrusions 15a and 15b. The bottom wall portion 13 has a square plate shape orthogonal to the up-down direction Z. The side wall portion 12 has a rectangular tubular shape protruding from outer edges of the bottom wall portion 13 towards the upper side. As illustrated in Fig. 2, the top wall portion 14 is connected to the upper end of the side wall portion 12. The support plate portion 16 is disposed on an upper surface of the bottom wall portion 13. As illustrated in Fig. 1, the support plate portion 16 has a rectangular plate shape extending in the left-right direction X. Two end portions of the support plate portion 16 in the left-right direction are connected to the side wall portion 12.

The first protrusions 15a and 15b protrude in the left-right direction X from the inner lateral surfaces of the casing 11. The first protrusion 15a protrudes towards the right side from an inner lateral surface on the left side among the inner lateral surfaces of the side wall portion 12. The first protrusion 15b protrudes towards the left side from an inner lateral surface on the right side among the inner lateral surfaces of the side wall portion 12. Each of the first protrusions 15a and 15b protrudes towards the other first protrusion. The first protrusion 15a and the first protrusion 15b are disposed at the same position in the front-back direction Y. The first protrusions 15a and 15b are disposed above the support plate portion 16. Although not shown, the first protrusions 15a and 15b have columnar shapes extending in the left-right direction X.

The circuit board 60 is disposed on the upper surface of the bottom wall portion 13 and on the back side with respect to the support plate portion 16. The circuit board 60 has a square plate shape orthogonal to the up-down direction Z. The circuit board 60 is electrically connected to the coil 30. The capacitor 70 is attached to an upper surface of the circuit board 60.

The coil 30 extends in the front-back direction Y. The coil 30 is formed by spirally winding a length of conducting wire about an axis parallel to the front-back direction Y. In other words, in the present specification, a "direction in which the coil extends" includes a direction extending along the central axis of the spirally wound coil. The coil 30 is disposed above the circuit board 60. In Fig. 1, the coil 30 is disposed in the middle of the power generation element 10 in the left-right direction X.

An end portion of the coil 30 on the back side is electrically connected to a first terminal 31. The first terminal 31 is disposed at a portion external to the casing 11. An end portion of the coil 30 on the front side is electrically connected to a first electrode of the capacitor 70. A second electrode of the capacitor 70 is electrically connected to a second terminal 32. The second terminal 32 is disposed at a portion external to the casing 11. As described above, the capacitor 70 is connected to the coil 30 in series. Accordingly, the capacitor 70 can be charged by the electric current generated in the coil 30. With the above, electric power can be suitably outputted from the first terminal 31 and the second terminal 32 according to the device on which the power generation element 10 is mounted.

The magnetic member 20 has a columnar shape extending in the front-back direction Y. The magnetic member 20 is disposed above the circuit board 60. As illustrated in Fig. 2, the magnetic member 20 is supported from below by supports 61 that protrude upwards from the upper surface of the circuit board 60. The magnetic member 20 is inserted inside the coil 30. In the present embodiment, the coil 30 is wound around the magnetic member 20. In the present embodiment, the size of the magnetic member 20 in the front-back direction Y is substantially the same as the side of the coil 30 in the front-back direction Y. The magnetic member 20 is a member in which a large Barkhausen effect occurs. The magnetic member 20 is made of amorphous metal, for example. Note that the large Barkhausen effect is a phenomenon in which a large Barkhausen jump, in which the direction of the magnetic flux density within a certain object is rapidly inverted when the direction of the magnetic field acting on the certain object is inverted, occurs. Note that the magnetic member 20 is not limited to a particular member as long as a large Barkhausen effect occurs, and may be Wiegand wire or the like.

The magnet 40 is disposed outside the coil 30 and in a vicinity of the magnetic member 20. In Fig. 1, the magnet 40 is disposed on the front side of the magnetic member 20. The magnet 40 has a prismatic shape extending in the left-right direction X. As illustrated in Fig. 2, the magnet 40 is disposed on an upper surface of the support plate portion 16. The magnet 40 is movable in the left-right direction X along the upper surface of the support plate portion 16. The magnet 40 is disposed at a position that overlaps the magnetic member 20 when viewed in the front-back direction Y. Accordingly, compared with a case in which the magnet 40 is disposed above the magnetic member 20, the size of the power generation element 10 in the up-down direction Z can be reduced.

Note that unless otherwise stated, it is only sufficient that the dispositional relationship between the magnet and the magnetic member described in the present specification is satisfied at least in a steady state. The steady state is a state in which, when the lower surface of the casing is mounted on a horizontal plane, the power generation element is stopped and the magnet is stationary.

As illustrated in Fig. 1, the magnet 40 has alternately different magnetic poles arranged side by side in the left-right direction X orthogonal to the front-back direction Y. In the present embodiment, the magnet 40 has, as the alternately different magnetic poles, a North pole 41 and a South pole 42 arranged on the right side of north pole 41. A position of a boundary between the alternately different magnetic poles, in other words, a position of a boundary 43 between the North pole 41 and the South pole 42 in the left-right direction X is within a width of the magnetic member 20 in the left-right direction. In Fig. 1, the position of the boundary 43 in the left-right direction X is the same as the position in the left-right direction X of the middle of the magnetic member 20 in the left-right direction. The boundary 43 overlaps the magnetic member 20 when viewed in the front-back direction Y. The boundary 43 is disposed in the middle of the magnet 40 in the left-right direction X.

The first elastic member 51 is stretchable in the left-right direction X. The first elastic member 51 includes coil springs that extend in the left-right direction X. The first elastic member 51 is a non-magnetic body. The first elastic member 51 is fixed to the magnet 40. The first elastic member 51 connects the magnet 40 and the casing 11 to each other.

In the present embodiment, the first elastic member 51 comprises a pair of a first elastic member 51a and a first elastic member 51b. The pair of first elastic members 51a and 51b are each fixed to a respective one of two end portions of the magnet 40 in the left-right direction. An end portion of the first elastic member 51a on the right side is fixed to an end portion of the magnet 40 on the left side. An end portion of the first elastic member 51a on the left side is fixed to the first protrusion 15a. More specifically, the first elastic member 51a is fixed to the first protrusion 15a by fitting the first protrusion 15a in an opening of the left-right direction end portion, that is, the left side end portion of the first elastic member 51a. Accordingly, the first elastic member 51a can be fixed to the casing 11 in a readily and stable manner.

An end portion of the first elastic member 51b on the left side is fixed to an end portion of the magnet 40 on the right side. An end portion of the first elastic member 51b on the right side is fixed to the first protrusion 15b. More specifically, the first elastic member 51b is fixed to the first protrusion 15b by fitting the first protrusion 15b in an opening of the left-right direction end portion, that is, the right side end portion of the first elastic member 51b. Accordingly, the first elastic member 51b can be fixed to the casing 11 in a readily and stable manner.

The elastic modulus of the first elastic member 51a and the elastic modulus of the first elastic member 51b are, for example, the same. The elastic moduli of the first elastic members 51a and 51b are appropriately determined according to the use environment and the like of the power generation element 10. Note that the elastic modulus of the first elastic member 51a and the elastic modulus of the first elastic member 51b may be different from each other.

The magnet 40 moves in the left-right direction X relative to the casing 11 in association with the expansion and contraction of the first elastic member 51. Specifically, when vibration is applied to the power generation element 10, the magnet 40 vibrates in the left-right direction X together with the expansion and contraction of the first elastic member 51 in the left-right direction X. A large Barkhausen effect occurs in the magnetic member 20 with the vibration of the magnet 40 in the left-right direction X, and voltage pulses are generated in the coil 30.

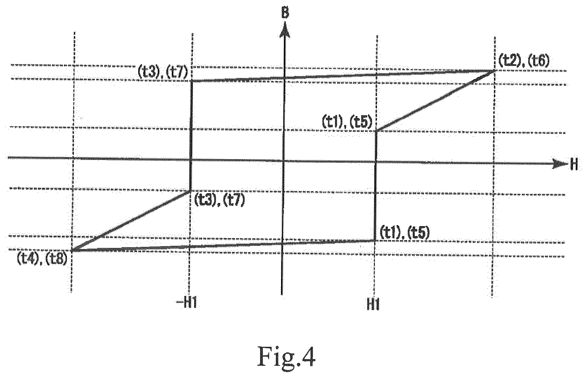

The upper diagram in Fig. 3 is a graph illustrating the change in a strength H of the magnetic field by the magnet 40 acting on the magnetic member 20. Note that in the upper diagram in Fig. 3, the axis of abscissas indicates time t, and the axis of ordinates indicates the strength H of the magnetic field acting on the magnetic member 20. The lower diagram in Fig. 3 is a graph illustrating the change in voltage V generated in the coil 30. In the lower diagram in Fig. 3, the axis of abscissas indicates time t, and the axis of ordinates indicates the voltage V generated in the coil 30. Fig. 4 is a graph illustrating a relationship between the magnetic flux density B in the magnetic member 20 and the strength H of the magnetic field by the magnet 40 acting on the magnetic member 20. In Fig. 4, the axis of abscissas indicates the strength H of the magnetic field and the axis of ordinates indicates the magnetic flux density B.

The magnetic field generated by the magnet 40 acts on the magnetic member 20. When the magnet 40 vibrates in the left-right direction X, the strength H of the magnetic field acting on the magnetic member 20 periodically changes as illustrated in the upper diagram in Fig. 3, for example. In the upper diagram in Fig. 3, for example, the direction of the magnetic field acting on the magnetic member 20 when the North pole 41 opposes the magnetic member 20 is indicated as being positive, and the direction of the magnetic field acting on the magnetic member 20 when the South pole 42 opposes the magnetic member 20 is indicated as being negative. The direction of the magnetic field acting on the magnetic member 20 when the North pole 41 opposes the magnetic member 20 and the direction of the magnetic field acting on the magnetic member 20 when the South pole 42 opposes the magnetic member 20 are opposite each other. By having the magnet 40 vibrate in the left-right direction X and having the magnetic poles opposing the magnetic member 20 in the front-back direction Y change alternately, the strength H of the magnetic field acting on the magnetic member 20 repeatedly alternates between a positive value and a negative value. In other words, the direction of the magnetic field acting on the magnetic member 20 is alternately inverted. The upper diagram in Fig. 3 illustrates a case in which the magnet 40 vibrates in the left-right direction X at a constant amplitude, and the strength H of the magnetic field changes in a sinusoidal manner.

When the absolute value of the strength H of the magnetic field reaches a first threshold after the direction of the magnetic field acting on the magnetic member 20 has changed, the direction of the magnetic flux density B in the magnetic member 20 becomes reversed rapidly. Electromagnetic induction occurs due to the rapid inversion in the direction of the magnetic flux density B, and voltage pulses are generated in the coil 30 as illustrated in the lower diagram in Fig. 3.

Specifically, voltage pulses are generated in the coil 30 at times t1, t3, t5, and t7 indicated in Fig. 3, for example. Times t1 and t5 are times when the strength of the magnetic field H has reached the first threshold value H1 after the direction of the magnetic field has switched from the negative direction to the positive direction. As illustrated in Fig. 4, the magnetic flux density B rapidly changes from a negative value to a positive value at times t1 and t5. With the above, electromagnetic induction occurs and voltage pulses are generated in the coil 30. As illustrated in Fig. 3, times t3 and t7 are times when the strength H of the magnetic field has reached a first threshold value -H1 after the direction of the magnetic field has switched from the positive direction to the negative direction. As illustrated in Fig. 4, the magnetic flux density B rapidly changes from a positive value to a negative value at times t3 and t7. With the above, electromagnetic induction occurs and voltage pulses are generated in the coil 30. Note that as illustrated in the lower diagram in Fig. 3, the directions of the voltage pulses generated at times t3 and t7 are opposite to the directions of the voltage pulses generated at times t1 and t5.

In order for the voltage pulse to be generated, the absolute value of the strength H of the magnetic field needs to be equivalent to or larger than a second threshold before the direction of the magnetic field is inverted. The above is for aligning the direction of magnetization in the entire magnetic member 20 in one direction. The absolute value of the second threshold is larger than the absolute value of the first threshold. In the upper diagram in Fig. 3, since the absolute value of the strength H of the magnetic field is equivalent to or larger than an absolute value of a second threshold H2 at times t2 and t6 when the value of the strength H of the magnetic field becomes the largest, voltage pulses are generated at times t3 and t7. Furthermore, since the absolute value of the strength H of the magnetic field is equivalent to or larger than an absolute value of a second threshold -H2 at time t4 when the value of the strength H of the magnetic field becomes the smallest, voltage pulses are generated at time t5. Furthermore, since the absolute value of the strength H of the magnetic field is equivalent to or larger than the absolute value of the second threshold -H2 at time t8 when the value of the strength H of the magnetic field becomes the smallest, a voltage pulse is generated at a time after time t8 when the strength H of the magnetic field becomes the first threshold value H1.

As described above, each time the direction of the magnetic field acting on the magnetic member 20 is inverted, a voltage pulse is generated in the coil 30. As the magnetic pole of the magnet 40 opposing the magnetic member 20 changes, the direction of the magnetic field acting on the magnetic member 20 changes. In other words, by having the North pole 41 and the South pole 42 alternately oppose the magnetic member 20, each time the North pole 41 and the South pole 42 alternately oppose the magnetic member 20, a voltage pulse is generated in the coil 30. In the present embodiment, since the magnet 40 can be vibrated in the left-right direction X with the first elastic member 51, when a vibration is applied to the power generation element 10, the magnetic pole of the magnet 40 opposing the magnetic member 20 can be changed a plurality of times with a single vibration. Accordingly, even when a slight vibration is applied to the power generation element 10, a plurality of voltage pulses can be generated in the coil 30 and the power generation amount of the power generation element 10 can be increased. Accordingly, according to the present embodiment, an efficient generation of electricity can be performed using vibration.

Furthermore, the rapid inversion in the direction of the magnetic flux density B caused by the large Barkhausen effect occurs even when the rate of change in the strength H of the magnetic field is small. Accordingly, even when the vibration applied to the power generation element 10 is small and the moving speed of the magnet 40 when the magnet 40 vibrates in the left-right direction X is small, a high voltage pulse in which a value of a voltage V is relatively high is generated in the coil 30. With the above, regardless of the magnitude of the vibration applied to the power generation element 10, the power generation amount of the power generation element 10 can be increased.

As described above, according to the power generation element 10 of the present embodiment, electricity can be generated efficiently by using a slight vibration applied to the power generation element 10. Accordingly, for example, by embedding the power generation element 10 in the floor, electricity can be generated efficiently by using the vibration generated when a person walks on the floor. Moreover, by installing the power generation element 10 in a device carried by a person, electricity can be generated efficiently by using the vibration generated when a person walks.

Furthermore, according to the present embodiment, since a pair of first elastic members 51a and 51b fixed to the two end portions of the magnet 40 in the left-right direction are provided, the magnet 40 can be easily vibrated in the left-right direction X in a stable manner. Furthermore, for example, the magnet 40 can be suppressed from impinging against the casing 11 due to moving excessively in the left-right direction X.

Furthermore, according to the present embodiment, the position of the boundary 43 in the left-right direction X is within the width of the magnetic member 20 in the left-right direction. Accordingly, when the magnet 40 vibrates in the left-right direction X, the magnetic pole of the magnet 40 opposing the magnetic member 20 is switched easily. With the above, the number of times in which the direction of the magnetic field acting on the magnetic member 20 changes can be increased easily, and the power generation amount of the power generation element 10 can be improved.

Furthermore, according to the present embodiment, since the first elastic member 51 is a non-magnetic body, the first elastic member 51 does not interfere with the magnetic field generated by the magnet 40. With the above, the inversion of the magnetic field acting on the magnetic member 20 can be made to occur suitably with the vibration of the magnet 40 in the left-right direction X. Accordingly, the power generation amount of the power generation element 10 can be suitably improved.

The present disclosure is not limited to the embodiment described above and other configurations can be adopted.
In the following description, descriptions of configurations that are similar to those in the description described above may be omitted by appropriately attaching the same reference numerals.

The number of the first elastic members 51 may be one or may be three or more. When the number of the first elastic members 51 is three or more, a plurality of first elastic members 51 are fixed to the end portions of the magnet 40 in the left-right direction, for example. Furthermore, the method with which the first elastic member 51 is fixed to the casing 11 is not limited to any method in particular. The first elastic member 51 may be directly fixed to the side wall portion 12. In such a case, the first protrusions 15a and 15b do not have to be provided. The first elastic member 51 is not limited to any member in particular as long as expansion and contraction can be performed in the left-right direction X and the magnet 40 can be vibrated in the left-right direction X.
The first elastic member 51 may be a cord or the like stretchable in the left-right direction X. The first elastic member 51 may be a magnetic body.

Furthermore, the number of magnetic poles of the magnet 40 is not limited to two, and may be three or more. In such a case as well, the North pole 41 and the South pole 42 are alternately arranged in the left-right direction X. Furthermore, another electronic element different from the capacitor 70 may be connected in series with the coil 30. The above another electronic element is, for example, a rectifier circuit or the like. Furthermore, the capacitor 70 may not be provided.

### <Second Embodiment>

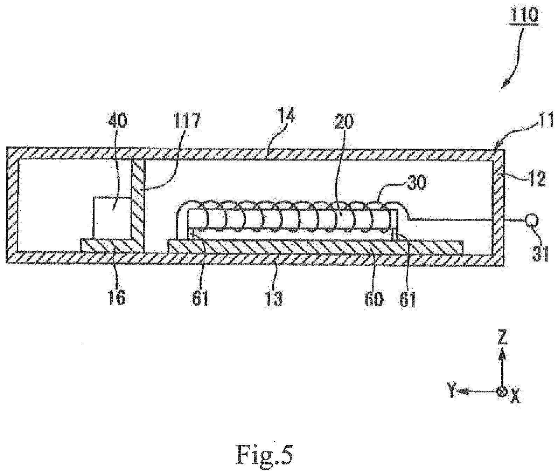

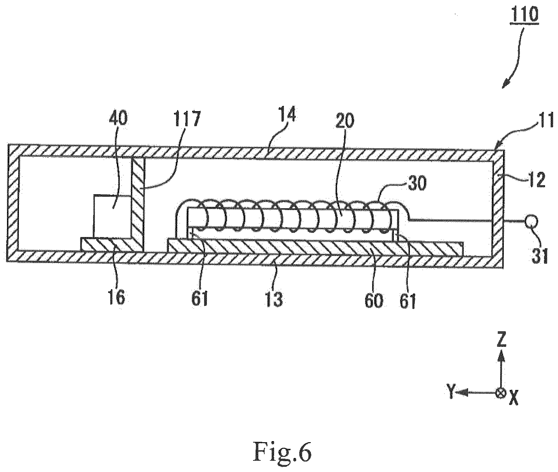

As illustrated in Fig. 5, a casing 111 in a power generation element 110 of the present embodiment includes a wall portion 117. As illustrated in Fig. 6, the wall portion 117 is a wall standing upwards from an end portion of the support plate portion 16 on the back side. An upper end of the wall portion 117 is connected to the top wall portion 14. As illustrated in Fig. 5, the wall portion 117 extends in the left-right direction X. Two end portions of the wall portion 117 in the left-right direction are connected to the side wall portion 12. The wall portion 117 partitions the inside of the casing 111 in the front-back direction Y. The wall portion 117 is disposed between the coil 30 and the magnet 40 in the front-back direction Y. Accordingly, the wall portion 117 can suppress the magnet 40 from moving backwards towards the coil 30. With the above, of the magnet 40 can be prevented from impinging against the coil 30 and the magnetic member 20. Note that illustration of the first elastic member 51 is omitted in Fig. 6.

The wall portion 117 is a non-magnetic body. Accordingly, the wall portion 117 does not interfere with the magnetic field generated by the magnet 40. With the above, the inversion of the magnetic field acting on the magnetic member 20 can be made to occur suitably with the vibration of the magnet 40 in the left-right direction X. Accordingly, the power generation amount of the power generation element 110 can be suitably improved.

In the present embodiment, the magnet 40 moves in the left-right direction X while being in contact with the wall portion 117. Accordingly, the movement of the magnet 40 in the left-right direction X can be guided by the wall portion 117. With the above, the movement of the magnet 40 in the left-right direction X can be stabilized.

### <Third Embodiment>

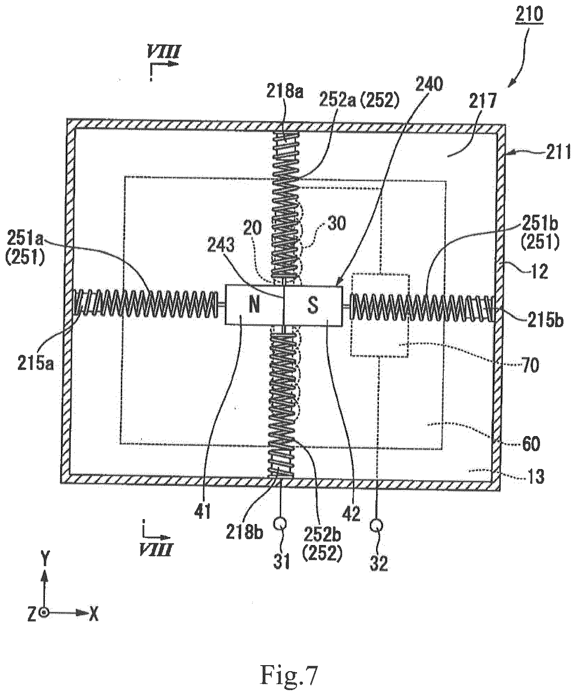

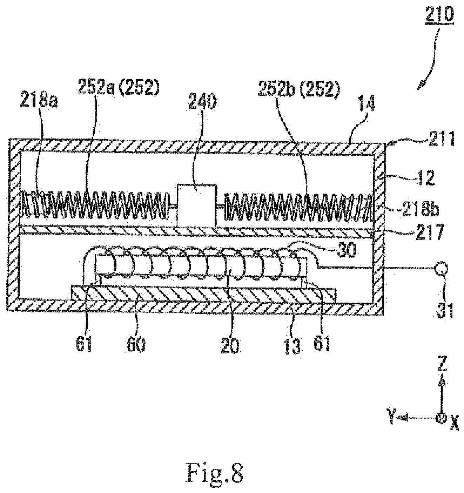

As illustrated in Fig. 7, a casing 211 in a power generation element 210 of the present embodiment includes a wall portion 217. The wall portion 217 has a square plate shape orthogonal to the up-down direction Z. The outer edges of the wall portion 217 are connected to inner lateral surfaces of the side wall portion 12. As illustrated in Fig. 8, the wall portion 217 partitions the inside of the casing 211 in the up-down direction Z. The wall portion 217 is disposed between the coil 30 and the magnet 240 in the up-down direction Z. Accordingly, the magnet 240 can be prevented from moving towards the coil 30, and the magnet 240 can be prevented from impinging against the coil 30 and the magnetic member 20. In the present embodiment, unlike the casing 11 of the first embodiment, the casing 211 do not have the support plate portion 16. Note that illustration of the first elastic member 251 is omitted in Fig. 8.

As illustrated in Fig. 7, in the casing 211, first protrusions 215a and 215b that are on the upper side with respect to the wall portion 217 protrude in the left-right direction X from the inner lateral surfaces of the side wall portion 12. The first protrusions 215a and 215b are disposed in the middle of the casing 211 in the front-back direction Y.

In the present embodiment, the casing 211 includes second protrusions 218a and 218b. The second protrusions 218a and 218b protrude in the front-back direction Y from the inner lateral surfaces of the casing 211. The second protrusion 218a protrudes towards the back side from an inner lateral surface on the front side among the inner lateral surfaces of the side wall portion 12. The second protrusion 218b protrudes towards the front side from an inner lateral surface on the back side among the inner lateral surfaces of the side wall portion 12. Each of the second protrusions 218a and 218b protrudes towards the other second protrusion. The second protrusion 218a and the second protrusion 218b are arranged at the same position in the left-right direction X. The second protrusions 218a and 218b are disposed above the wall portion 217. The positions of the second protrusions 218a and 218b in the up-down direction Z are the same as the positions of the first protrusions 215a and 215b in the up-down direction Z. The second protrusions 218a and 218b are disposed in the middle of the casing 211 in the left-right direction X. Although not shown, the second protrusions 218a and 218b have columnar shapes extending in the left-right direction X.

As illustrated in Fig. 8, the magnet 240 is disposed on an upper surface of the wall portion 217. The magnet 240 is movable in the left-right direction X and in the front-back direction Y along the upper surface of the wall portion 217. As illustrated in Fig. 7, the magnet 240 is disposed at a position overlapping the magnetic member 20 when viewed in the up-down direction Z orthogonal to both the front-back direction Y and the left-right direction X. Accordingly, compared with a case in which the magnet 240 is disposed on one side of the magnetic member 20 in the front-back direction Y, the size of the power generation element 210 in the front-back direction Y can be reduced.

The magnet 240 is disposed in the middle of the magnetic member 20 in the front-back direction Y when viewed in the up-down direction Z. The magnet 240 is disposed in the middle of the casing 211 when viewed in the up-down direction Z. The position of a boundary 243 of the magnet 240 in the left-right direction X is within the width of the magnetic member 20 in the left-right direction. Accordingly, when the magnet 240 vibrates in the left-right direction X, the magnetic pole of the magnet 240 opposing the magnetic member 20 and the wall portion 217 is switched easily. With the above, the number of times in which the direction of the magnetic field acting on the magnetic member 20 changes can be increased easily, and the power generation amount of the power generation element 210 can be improved. In Fig. 7, the position of the boundary 243 in the left-right direction X is the same as the position in the left-right direction X of the middle of the magnetic member 20 in the left-right direction. In the present embodiment, the boundary 243 overlaps the magnetic member 20 when viewed in the up-down direction Z.

The power generation element 210 includes a second elastic member 252. The second elastic member 252 is stretchable in the front-back direction Y. The second elastic member 252 includes coil springs that extend in the front-back direction Y. The second elastic member 252 is a non-magnetic body. The second elastic member 252 is fixed to the magnet 240. The second elastic member 252 connects the magnet 240 and the casing 211 to each other.

In the present embodiment, the second elastic member 252 comprises a pair of a second elastic member 252a and a second elastic member 252b. The pair of second elastic members 252a and 252b are fixed to a respective one of two end portions of the magnet 240 in the front-back direction. An end portion of the second elastic member 252a on the back side is fixed to an end portion of the magnet 240 on the front side. In the present embodiment, the end portion of the second elastic member 252a on the back side is fixed to the middle of the magnet 240 in the left-right direction X and in the end portion of the magnet 240 on the front side, that is, the boundary 243. An end portion of the second elastic member 252a on the front side is fixed to the second protrusion 218a. More specifically, the second elastic member 252a is fixed to the second protrusion 218a by fitting the second protrusion 218a in an opening of the front-back direction end portion, that is, the front side end portion of the second elastic member 252a. Accordingly, the second elastic member 252a can be fixed to the casing 211 in a readily and stable manner.

An end portion of the second elastic member 252b on the front side is fixed to an end portion of the magnet 240 on the back side. In the present embodiment, the end portion of the second elastic member 252a on the front side is fixed to the middle of the magnet 240 in the left-right direction X and in the end portion of the magnet 240 on the back side, that is, the boundary 243. An end portion of the second elastic member 252b on the back side is fixed to the second protrusion 218b. More specifically, the second elastic member 252b is fixed to the second protrusion 218b by fitting the second protrusion 218b in an opening of the front-back direction end portion, that is, the back side end portion of the second elastic member 252b. Accordingly, the second elastic member 252b can be fixed to the casing 211 in a readily and stable manner.

The elastic modulus of the second elastic member 252a and the elastic modulus of the second elastic member 252b are, for example, the same. The elastic moduli of the second elastic members 252a and 252b are appropriately determined according to the use environment and the like of the power generation element 210. Note that the elastic modulus of the second elastic member 252a and the elastic modulus of the second elastic member 252b may be different from each other. Furthermore, the elastic modulus of the first elastic member 251 and the elastic modulus of the second elastic member 252 may be the same or may be different from each other.

In the present embodiment, the first elastic members 251a and 251b are disposed in the middle of the casing 211 in the front-back direction Y. The second elastic members 252a and 252b are disposed in the middle of the casing 211 in the left-right direction X.

The magnet 240 moves in the front-back direction Y relative to the casing 211 in association with the expansion and contraction of the second elastic member 252. Specifically, when vibration is applied to the power generation element 210, the magnet 240 vibrates in the front-back direction Y together with the expansion and contraction of the second elastic member 252 in the front-back direction Y. According to the present embodiment, by providing the second elastic member 252, when the magnet 240 moves in the front-back direction Y, the second elastic member 252 expands and contracts, and force is applied in a direction opposite to a direction in the front-back direction in which the magnet 240 moves. With the above, the magnet 240 can be suppressed from impinging against the casing 211 due to moving excessively in the front-back direction Y. On the other hand, since the movement of the magnet 240 in the front-back direction Y is allowed to some extent, the magnet 240 can move freely due to the vibration applied to the power generation element 210. Accordingly, the magnet 240 vibrates in the left-right direction X more easily, and the power generation amount of the power generation element 210 can be improved further.

Furthermore, according to the present embodiment, since the pair of second elastic members 252a and 252b fixed to the two end portions of the magnet 240 in the front-back direction are provided, the magnet 240 can be stabilized in the front-back direction and be held easily. Furthermore, the magnet 240 can be further suppressed from impinging against the casing 211 due to moving excessively in the front-back direction Y.

Furthermore, as in the present embodiment, by providing elastic members in the two end portions of the magnet 240 in the left-right direction and the two end portions of the magnet 240 in the front-back direction, the magnet 240 can be held in a stable manner. Furthermore, even when the magnet 240 moves in either the left-right direction X or in the front-back direction Y, the magnet 240 can be prevented from impinging against the casing 211.

Note that the number of the second elastic member 252 may be one or may be three or more. When the number of the second elastic member 252 is three or more, a plurality of second elastic members 252 are fixed to the end portions of the magnet 240 in the front-back direction, for example. Furthermore, the method with which the second elastic member 252 is fixed to the casing 211 is not limited to any method in particular. The second elastic member 252 may be directly fixed to the side wall portion 12. In such a case, the second protrusions 218a and 218b do not have to be provided. The second elastic member 252 can be any member that is stretchable in the front-back direction Y and is not limited to any member in particular. The second elastic member 252 may be a cord or the like stretchable in the front-back direction Y. The second elastic member 252 may be a magnetic body.

### <Embodiment of Smart Key>

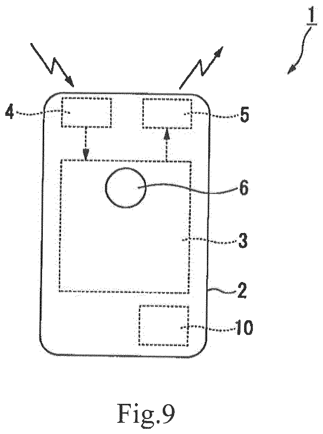

An example of a device, in which the power generation elements of the embodiments described above are mounted, includes a smart key. As illustrated in Fig. 9, the smart key 1 of the present embodiment includes a case 2, a control unit 3, a receiving unit 4, a transmitting unit 5, an operation unit 6, and the power generation element 10 of the first embodiment described above.

The case 2 houses the units of the smart key 1. The receiving unit 4 receives a signal from a transmitter mounted in a vehicle or the like. The transmitting unit 5 transmits a signal to a receiver mounted in a vehicle or the like. The operation unit 6 is operated by a user. The operation unit 6 is, for example, a button. An operation signal is sent to the control unit 3 with the user pressing the operation unit 6. The receiving unit 4, the transmitting unit 5, and an operation unit 6 are connected to the control unit 3. The control unit 3 controls the transmission of the signal from the transmitting unit 5 based on a signal received by the receiving unit 4 and an operation signal input from the operation unit 6.

In the smart key 1, the power generation element 10 functions as a power supply. In other words, electric power generated by the power generation element 10 is supplied to each unit of the smart key 1. For example, the smart key 1 is carried by the user. Accordingly, when the user walks or the user operates the smart key 1, a vibration is applied to smart key 1. With the above, a vibration is applied to the power generation element 10 and electricity is generated in the manner described above. Accordingly, there will be no need to replace the battery.

Note that the usage of the power generation element of each embodiment described above is not limited to any usage, and the power generation element may be mounted in any device other than the smart key. Furthermore, the configurations described above can be combined as appropriate within the range in which the configurations do not contradict each other.

Note that in the power generation elements of the embodiments described above, the casing may have a cylindrical shape whose outer shape when viewed in the up-down direction Z is circular.

### Reference Signs List

- 1: smart key
- 10,: 110, 210 power generation element
- 11, 111, 211: casing
- 15a, 15b, 215a, 215b: first protrusion
- 20: magnetic member
- 30: coil
- 40, 240: magnet
- 43, 243: boundary
- 51, 51a, 51b, 251, 251a, 251b: first elastic member
- 60: circuit board
- 70: capacitor
- 117, 217: wall portion
- 252, 252a, 252b: second elastic member
- X: left-right direction (second direction)
- Y: front-back direction (first direction)
- Z: up-down direction (third direction)

## Claims

1. A power generation element comprising:
a coil that extends in a first direction;
a magnetic member that is inserted inside the coil and in which a large Barkhausen effect occurs;
a magnet disposed outside the coil and in a vicinity of the magnetic member;
a first elastic member fixed to the magnet; and
a casing that houses the magnetic member, the coil, the magnet, and the first elastic member, wherein
the magnet has alternately different magnetic poles arranged side by side in a second direction orthogonal to the first direction,
the first elastic member connects the magnet and the casing to each other and is stretchable in the second direction, and
the magnet moves in the second direction relative to the casing in association with expansion and contraction of the first elastic member.

2. The power generation element according to Claim 1, wherein
the first elastic member comprises a pair of first elastic members, each of the pair of first elastic members being fixed to a corresponding one of two end portions of the magnet in the second direction.

3. The power generation element according to Claim 1 or 2, wherein
the magnet is disposed at a position that overlaps the magnetic member when viewed in the first direction.

4. The power generation element according to Claim 1 or 2, wherein
the magnet is disposed at a position that overlaps the magnetic member when viewed in a third direction orthogonal to both the first direction and the second direction.

5. The power generation element according to Claim 4, further comprising:
a second elastic member that is fixed to the magnet, wherein
the second elastic member connects the magnet and the casing to each other and is stretchable in the first direction, and
the magnet moves in the first direction relative to the casing in association with expansion and contraction of the second elastic member.

6. The power generation element according to Claim 5, wherein
the second elastic member comprises a pair of second elastic members, each of the pair of second elastic members being fixed to a corresponding one of two end portions of the magnet in the first direction.

7. The power generation element according to any one of Claims 1 to 6, wherein
the casing includes a non-magnetic body disposed between the coil and the magnet, and
the magnet moves in the second direction while being in contact with the wall portion.

8. The power generation element according to any one of Claims 1 to 7, wherein
a boundary between the alternately different magnetic poles in the second direction is positioned within a width of the magnetic member in the second direction.

9. The power generation element according to any one of Claims 1 to 8, wherein
the casing includes a first protrusion that protrudes in the second direction from an inner lateral surface of the casing,
the first elastic member is a cylindrical coil spring that extends in the second direction, and
the first elastic member is fixed to the first protrusion by fitting the first protrusion in an opening of an end portion of the first elastic member in the second direction.

10. The power generation element according to any one of Claims 1 to 9, further comprising:
a circuit board electrically connected to the coil; and
a capacitor attached to the circuit board, wherein
the capacitor is connected in series with the coil.

11. The power generation element according to any one of Claims 1 to 10, wherein
the first elastic member is a non-magnetic body.

12. A smart key comprising the power generation element according to any one of Claims 1 to 11.
